(19) Europäisches Patentamt
European Patent Office
Office européen des brevets

(11) **EP 3 082 010 A1**

(12) **EUROPEAN PATENT APPLICATION**

(43) Date of publication:
**19.10.2016 Bulletin 2016/42**

(51) Int Cl.:
***G05D 23/19*** *(2006.01)*

(21) Application number: **15163955.6**

(22) Date of filing: **17.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fourdeg Oy**
**02210 Espoo (FI)**

(72) Inventors:
• **Makkonen, Markku**
**02210 Espoo (FI)**

• **Kaijärvi, Mikko**
**00200 Helsinki (FI)**
• **Saunamäki, Jarkko**
**01200 Vantaa (FI)**
• **Koivo, Heikki**
**02480 Kirkkonummi (FI)**

(74) Representative: **IPR Partners Ltd**
**Hietalahdenranta 13**
**00180 Helsinki (FI)**

Remarks:
Amended claims in accordance with Rule 137(2) EPC.

(54) **A SYSTEM FOR DYNAMICALLY BALANCING A HEAT LOAD AND A METHOD THEREOF**

(57) The invention relates to optimizing a heat load in a district heating network adapted to distribute heating medium into an entity to be heated. Nowadays, central district heating providers generate an indication about the energy cost, i.e. a price signal, on the basis of which heating can be timed to optimize heating costs during cold seasons. Using only the price signal can cause undesired peaks in the heating network load. To level peaks in heat load, the entity is divided into a number of enclosures, and, according to the method of the present invention, a thermal behavior scheme of each enclosure, attributes of the enclosures and external information relating to heating are obtained. On the basis of the obtained information one or more optimization schemes for optimizing heat load is created.

Fig. 6

## Description

### Technical field

Generally, the invention relates to a system and a method for dynamically balancing a heat load. More precisely, the invention relates to optimizing a heat load in a district heating network adapted to distribute heating medium into an entity to be heated.

### Background technology

The current solutions for central district heating systems provide heat when it is needed, i.e. when outside temperature drops to a predetermined level for a longer time. A colder weather requires more heat power to be transferred in the heating pipe network, which can be arranged by increasing the temperature of the heating medium. However, this solution has disadvantages. Heat loss to the ground in district heating pipes can be significant and has linear relationship to temperature difference.

Cold season, and especially a short cold peak, may cause short need to provide more heating power. Nowadays, central district heating providers generate an indication about the energy cost, i.e. a price signal, on the basis of which heating can be timed to optimize heating costs during cold seasons. Using only the price signal can cause peaks in the heating network load. The peaks in heat load are undesired, because the short period peak power generation often exceeds the flexibility of main power stations or heat batteries, requires use of costly fuels, and/or requires applying spare power stations.

Typically a large and efficiency optimized main power station can provide the power needed to serve the required heating down to certain outdoor temperature. Under such temperature additional power stations can be introduced to extent the power, but starting a power station is expensive and it may also cause more pollutions. Starting a power station only for very short time period may increases costs significantly. In the district heating network, heating power short and long term need variation is sometimes balanced by separate large heat batteries which can store excess production and release it while needed.

In addition, in a same building, which is heated by liquid radiators, may be apartments or other spaces, having different temperatures unintentionally. One may be too cold and the other too hot, for example. It is known that in large building having several floors indoor temperature balancing is difficult, because warmer heating medium may heat lower floors more than the upper floors. Thus, inhabitants in lower level may have too hot apartment, whereas inhabitants in upper level may suffer from coldness. Balancing the temperature difference in a building may be difficult and it usually demands a person to perform it manually in situ. In many large buildings the unintentional indoor temperature unbalance is not remotely readable thus not known for building maintenance without inhabitants' complaints.

It is also a known problem that inhabitants may have different preferences and motivations, what come to the room temperature. One inhabitant may want to have higher room temperature in order to feel comfort, the other wants to save money. On the other hand, many buildings tends to have spaces, which are not in the same use as residential rooms and spaces, but those are still heated in the same way as the rest of the building.

### Summary of the invention

It is an object of the present invention to implement such a solution, that previously mentioned drawbacks of the prior art could be diminished. In particular, the invention is implied to solve how to efficiently control heat load divided into enclosures, so that peaks in the demanded heating can be avoided or at least leveled.

A system according to the present invention is characterized by features disclosed in the characterizing portion of the independent claim 1 describing the system.

A method according to the present invention is characterized by features disclosed in the characterizing portion of the independent claim 2 describing the method.

According to an embodiment of the invention a system for optimizing heat load in a district heating network adapted to distribute heat in a form of heating medium into an entity to be heated, which entity is divided into a number of enclosures comprises

- a data storage for storing enclosure data, which enclosure data comprises a thermal behavioral scheme for each enclosure, and at least one attribute for each enclosure selected from group consisting of: a category, an usage time range, one or more temperature ranges, a location in the building;

- means for obtaining temperature information related to said enclosures;

- means for obtaining external information, such as weather forecast, related to heating;

- heating control means, such as one or more radiator, for adjusting heating in an enclosure, which heating control means are arranged to be functionally connected with the enclosure in question;

- control means, like a central computer entity, for obtaining enclosure data, enclosure temperature information and external information, which said control means is arranged to produce one or more heating optimization models on the basis of enclosure data, enclosure temperature information and/or external information,

wherein said system is arranged to execute a selected heating optimization model.

According to an embodiment of the invention a method for optimizing a heat load in a district heating network adapted to distribute heat in a form of heating medium to an entity to be heated, which entity is divided into a number of enclosures, comprises at least following steps:

- obtaining a thermal behavior scheme of each enclosure;

- obtaining information relating to attributes of the enclosures;

- obtaining external information relating to heating;

- creating one or more optimization schemes for optimizing heat load.

In an embodiment, a method according to the present invention further comprises a step of utilizing one or more optimization factors from a group consisting of: prioritizing one or more categories, pre-heating one or more enclosures and/or categories, post-heating one or more enclosures and/or categories, allowing the temperature to drop a predetermined amount in one or more enclosures and/or categories, optimizing a heating order in a building.

In an embodiment, a method according to the present invention further comprises a step of executing a selected optimization scheme. This step can be implemented by using the heating control means arranged to be functionally connected with the enclosure in question.

In another embodiment, a method according to the present invention further comprises a step of updating one or more said thermal behavioral schemes. This feature is advantageous, because it enables the usage of learning system. By knowing the thermal behavior of each enclosure, it may be possible to create more accurate optimization schemes. Because there may be changes in environmental circumstances of enclosures, such as renovations for example, it may be important to update the thermal behavioral schemes dynamically. In addition, it may be possible to diagnose faults and malfunction in heating system of a building by noticing changes in thermal behavioral schemes.

In another embodiment, a method according to the present invention further comprises a step of selecting one or more optimization factors. This feature gives to a user a possibility to select by which means the levelling is implemented and provides an opportunity to create optimization schemes based on different factors.

In an embodiment, a method according to the present invention further comprises a step of obtaining temperature value/values of each enclosure, and in another embodiment, a method according to the present invention further comprises a step of updating one or more said thermal behavioral schemes in accordance of obtained information relating to the heating of enclosures. Yet, in another embodiment, a method according to the present invention further comprises a step of indicating significant changes in a thermal behavioral scheme. These embodiments provide wide possibility to create an effective continuous learning system for updating thermal behavioral schemes of the enclosures in the entity as well as to recognize changes and indicate possible failures relating to the components in the system.

In another embodiment, a method according to the present invention further comprises an initializing step of learning and saving said thermal behavior for each enclosure before introducing the heat load optimization. The embodiment in question can be utilized before taking the system into use.

Significant advantages can be achieved with the present invention when compared to the prior art solutions. The system and its architecture according to the present invention finds particular use in context of a district heating network adapted to distribute heating medium, but it may be applied also to smaller heating networks, such as used in a house having various kinds of spaces and/or apartments.

The system of the present invention may allow an automated and/or control of heating in a room level or even in a smaller enclosure. By generating an opportunity for a district heating provider to control each room separately, it may give a wider opportunity to optimization of heating, which may decrease heating expenses. By levelling peaks in a heating load may also provide reduction of heating power production costs.

By using external information, it may be possible to estimate well in advance the need for additional heating capacity, which may allow a district heating provider to plan and start additional heating power station, if needed, or balance the heating power need timely between adjustable amount of buildings or selectable enclosures. By understanding the heating load in such a low granularity, it may also be possible to produce estimate the heating needs in normal and optimized cases and estimate the heating profile even with the weather predictions added. In accordance with the estimates, it may be possible to provide various cost estimates to the district heat provider based on different strategies to reply the heating needs.

The system according to the present invention provides information parameters about the enclosures feasible adjustment range for district heating control system to optimize the actual timely heating demand by the said enclosures. The parameters are based on dynamic learning of the cumulating data taking into account factors like outdoor weather conditions, building usage, priority of the enclosures and the agreed quality of service. The district heating control system may or may not utilize the information parameters for giving operating parameters for the system according to the present invention to control the buildings and enclosures to reach their power saving target and ensure the agreed indoor temperature quality.

The system according to the present invention can further optimize the thermostat behavior to the room and its environment based on the factual measured and predicted environmental data. Even further, the by nature parallel optimized room thermostats operation can be inter-correlated to perform heating control optimization at the heatable entity level. The system according to the present invention performs optimized control according to one or more rules, as an example, when a peak in the heat load is predicted from external information, prioritizing certain enclosure categories, pre-heating some categories in order to gather heat in advance, post-heating some categories in order to avoid peak in the future, letting the temperature to drop a certain amount to get through a short cold season, to name a few examples of optimization.

In addition, cost saving can be achieved due to optimization according to the present invention, which may provide a possibility to drop the temperature of heating medium in the heating network causing reduced transmission loss.

Furthermore, the architecture of the system according to the present invention may provide a possibility to adjust the system by adjusting software algorithms, which can immediately be introduced to the existing installed base, without a need to change or adjust the components of the system, which naturally bring savings in time and costs.

The method according to the present invention may enable to produce various types of optimization schemes, which may give to the district heat provider an opportunity to estimate well in advance the need for additional heating capacity, select desired optimization model and execute it, as well as to plan and either start/add level or avoid starting/adding level of additional heating power station, if needed.

Furthermore, the present invention may enable a reduced communication between thermostats, thermometers and system by transferring only needed data and obtaining temperature information only when needed. This battery optimization may cause savings in maintenance costs and help to improve system to be even more reliable.

The system and the method of present invention can further be utilized for automatic balancing of room temperatures in a building. Adjusting of the system may be performed remotely without a need of any measures in situ. The system and the method can also be utilized to diagnosing and indicating faults and malfunctions in an internal heating system of a building or an enclosure. Furthermore, it may provide an efficient tool to compare heating features between buildings, apartments, rooms and even enclosures.

For example, to an inhabitant the system and the method in question may provide a possibility to choose a unique temperature even for different rooms or enclosures. One inhabitant may not be dependable of selections and preferences of the other inhabitants. The present invention may further provide a possibility to adjust the temperature according to a time of the day, for example, so that in the night time or when inhabitants are not present the temperature may be lower. The system may allow the building maintenance to predefine and remotely change a range of acceptable indoor temperature setting in which the inhabitants can make their adjustments.

The expression "enclosure" may herein refer to a room, a space or another zone separated from a wider space.

The expression "radiator" may herein refer to a heating device, integratable into a central district heating system, arranged to heat an enclosure by circulating heating medium through the radiator.

The expression "heating medium" may herein refer to heatable fluid, which can flow in a heating network, such as, but not limited to, steam, water and/or some other suitable liquid, gas of that liquid or the combination thereof.

The expression "external information" may herein refer to information outside the heatable entity and/or the heating network, such as, but not limited to, one or more weather forecasts, information relating to energy prices and costs, and calendar information, such as national holidays, for example.

The expression "a number of" may herein refer to any positive integer starting from one (1). The expression "a plurality of" may refer to any positive integer starting from two (2), respectively.

Some preferable embodiments of the invention are described in the dependent claims.

## Short description of the drawings

Next, the invention is described in more detail with reference to the appended drawings, in which

Fig. 1 illustrates an exemplary embodiment of the system according to the present invention,

Fig. 2 illustrates an exemplary embodiment of a time domain performance according to the present invention,

Fig. 3 illustrates an exemplary embodiment of energy saving temperature drops according to the present invention,

Fig. 4a illustrates a basic system architecture of the present invention,

Fig. 4b depicts an exemplary heat loads as a function of time,

Fig. 4c depicts a flow chart of an exemplary method for creating a capability data,

Fig. 5 illustrates an exemplary view of the system according to the present invention,

Fig. 6 depicts a flow chart of a method for optimizing a heat load in a district heating network adapted to distribute heat in a form of heating medium to an entity to be heated according to an embodiment of the present invention.

## Detailed description of the embodiments

As an example of the implementation, the system according to the present invention is now described.

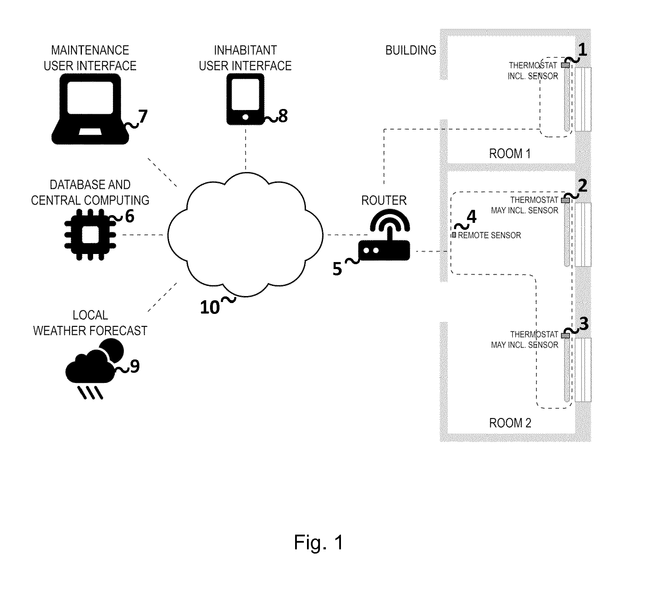

According to Fig. 1, two rooms are presented. Room 1 has a first thermostat 1 including a sensor. Room 2 has two thermostats 2, 3 that each may optionally have a sensor. Room 2 has additionally a remote temperature sensor 4. On the system level, the first thermostat and the measurements made by its sensor are associated with Room 1. The second and third thermostats and the remote sensor and their measurements are associated with Room 2. The heating control of Room 1 is associated with the control performed by the first thermostat and the heating control of Room 2 is associated to the control performed by the second and third thermostats. A router 5 establishes a connection between said three thermostats, remote sensor and the central computing entity 6. The system according to the embodiment of the present invention further has a maintenance and inhabitant user interface 7, 8 to enable for example installation configuration of the system, for run time reporting, maintenance alerts and setting of desired temperature levels or schedules. The embodiment further has a weather forecast interface 9, where forecast data may be received to be processed to yield weather parameters, such as forecasted temperature levels relative to future time instances or intervals. The connections and communication 10 between the different entities of the system may be carried out using any known or future suitable wireless or wired connection or combination thereof.

The distributed adaptive and predictive heating control system and method according to the present invention is a PID controller tuning and gain scheduling system and method. More precisely, according to an embodiment of the present invention, the one or more thermostats of the disclosed system are proportional-integral-derivative controllers (PID controllers) or generic control loop feedback mechanism controllers. A thermostat as such calculates an error value $e(t)$ as the difference between a measured process variable and a desired set point at a time instance t. The thermostat attempts to minimize the error by adjusting the heat/temperature management process control inputs to adjust process elements such as for example the position of a control valve or the power supplied to a heating element.

The PID controller calculation algorithm involves three separate parameters, and is accordingly sometimes called three-term control: the proportional, the integral and derivative values, denoted P, I, and D. These values can be interpreted in terms of time: P depends on the present error, I on the accumulation of past errors, and D is a prediction of future errors, based on a gradient of the error at time t. The proportional, integral, and derivative terms are summed to calculate the output of the PID controller. Defining $u(t)$ as the controller output, the form of the PID algorithm can be written as:

$$u(t) = K_p e(t) + K_i \int_0^t e(\tau)d\tau + K_d \frac{d}{dt}e(t)$$

As evident to a person skilled in the art, the terms $K_p$, $K_i$ and $K_d$ refer to the proportional, integral and derivative gains of the control corrective terms that are the subject of said tuning and gain scheduling mentioned earlier to achieve the optimum values for a desired control response.

According to the present invention, said tuning and gain scheduling is achieved by processing of the central computing entity by receiving periodically or continuously measurement values and associated time instances from one or more thermostats and optional sensors. The tuning and gain scheduling, referred herein as learning, adaptation and predicting, is further achieved by determining the control response and error *e(t)* based on these received measurements and observing the response stability, sensitivity, overshoot, settling rate, noise error etc. to adjust the thermostat PID-parameters, as needed and as disclosed herein.

The proportional term of the thermostat controller produces an output value that is proportional to the current error value. The proportional response can be adjusted by multiplying the error by its gain. If the controller response to the error is too slow, increasing the gain will make the controller more sensitive to the difference between measured temperature and the desired temperature. If the gain is too large, it results in instability of the control and has to be decreased but avoiding a proportional gain so low, that the control action becomes too small when responding to system disturbances. Tuning theory and industrial practice indicate that the proportional term should contribute the bulk of the output change. Because a non-zero error is required to drive the proportional controller, it generally operates with a steady-state error or an added compensating bias term to the set point or output, or dynamically added integral term.

The integral term is proportional to both the magnitude of the error and the duration of the error and may be defined as the integral of the instantaneous error over time. The term describes the cumulative offset of the control response relative to the desired set point. The integral term by means of its gain multiplier slows down the movement of the process towards set point and eliminates the residual steady-state error that occurs with a pure proportional controller. The integral term responds to cumulative error of the control response and may attribute to overshoot the set point value.

Derivative term predicts system behavior by its gain parameter and the instantaneous gradient of the error and thus may improve the settling time of the system. Its inherent sensitivity to measurement noise can be managed additionally by adjusting its gain by passing the measured error through a linear low-pass filter or a nonlinear median filter.

The thermostat PID controller has the initial set of parameters stored in the production. Those parameters have been defined in to represent optimal heating quality with most efficient energy consumption. The parameters are calculated using for example an improved Cohen-Coon tuning rule together with measured and simulated model buildings behavior. After installation the thermostat starts to operate with the initial parameter set. The thermostat uploads the actual temperature and proportional valve opening information to central computing. After certain period of time the cumulated data is applied to define a more optimum set of parameters using a mathematical model for optimizing the PID controller. The procedure is repeated periodically or continuously to reach optimized response and also keep track of the potential unacceptable decay or faults in the heating system.

By adjusting the PID-parameters and observing stability, sensitivity, overshoot, settling rate, noise error etc. the optimized PID-parameters for an enclosure under desired control may be achieved.

According to the present invention, an enclosure is modeled as the control response behavior of the enclosure under a control defined by a set of PID-parameters to the prevailing conditions. The control response according to the present invention and an exemplary embodiment thereof is an enclosure temperature representation as a function of time, calculated from temperature measurements associated with the enclosure and measurement (relative) time instants.

The temperature outside the enclosure, whether outside the building or within the building influences the behavior of the enclosure and can be seen in its response curve. The influence depends on structures, openings, insulation etc. of the boundaries of the enclosure and the temperature difference relative to the enclosure. The PID-parameters can further be optimized by observing stability, sensitivity, overshoot, settling rate, noise error etc. of the control response relative to measured outside temperatures, measured enclosure temperature and the desired temperature.

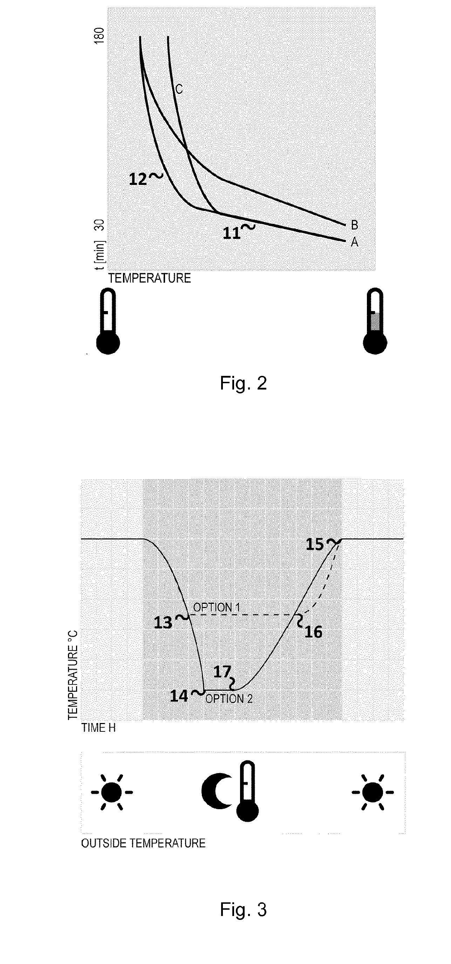

Even further, modeling an enclosure thermal properties indirectly by a set of control response behavior curves, according to the present invention, a thermostat and building heating time domain performance relative to the absolute heating power available and the outdoor temperature is calculated. An embodiment of said time domain performance is illustrated in Fig. 2. The time domain performance of three heated rooms are described as the time required to heat the room to desired temperature from a lower staring temperature as a function of outdoor temperature. In Fig. 2 the room A and C heating behavior are similar but the radiator absolute heating power is less in room C which limits the temperature range in very cold outdoor temperature condition. The room B has least heating power for the heated space but its insulation is most efficient.

The time domain performance according to the present invention and an exemplary embodiment thereof is calculated using control response curves associated with different outside temperatures. The control response defines the time duration relationship to a temperature difference taking place relative to a given outside temperature. Thus a representation of the time domain performance of an enclosure as in Fig. 2 is calculated using one or more control response curves of the enclosure and optionally interpolating and extrapolating to arrive at a curve describing the time it takes for the enclosure to heat from a starting temperature to and end temperature as a function of outside temperature. The curves in Fig. 2 depict the typically observed linear and nonlinear behavior regions 11, 12 of an enclosure relative to outside temperature. More generally, the time domain performance according to the present invention is calculated from temperature measurements associated with the enclosure and measurement (relative) time instants and associated outside temperatures of said enclosure, the calculation optionally including interpolating, extrapolating, using statistical methods, fuzzy logic reasoning, model fitting or any other appropriate method of utilizing said measurements.

As described herein, the thermostat according to the present invention possesses an adaptive learning behavior by having a first set of (default) controller parameters that are optimized periodically or continuously. The optimization according to the present invention is achieved by the thermostat providing periodically or continuously temperature measurements from the room or zone where it resides to the central computing entity. The entity calculates a second set of controller parameters to optimize the controller performance in the particular room by processing a set of measured temperatures, each measurement having an associated time instant or a relative time difference/distance relative to other measurements. Thus, a control response of the enclosure can be defined as a temperature behavior relative to time and desired temperature level, or as a time dependent representation of error $e(t)$. Further, the measurements provided to the central computing entity may include temperature measurements representing a temperature outside the thermostat local enclosure, having a similar and comparable associated notion of time as the enclosure temperatures have. The operation is repeated periodically or continuously to learn the optimized set of parameters.

The optimization according to an embodiment of the present invention further comprises of a thermostat possessing a predictive learning behavior. Knowing the control response of the enclosure at a given outside temperature or the effect of the outside temperature on the control response, it is possible to optimize the control of the enclosure temperature to maximally save heating energy and avoid overshooting or undershooting the desired enclosure temperature, when outside conditions change. More precisely, the thermostat and building heating time domain performance is used to determine advanced corrective control changes that reflect the thermal behavior of the enclosure.

Even further, the central computing unit may receive predictive temperature values. To this end, any present or future parsing method may be utilized in connection to the present invention, to yield from a weather forecast data or service a set of parameters representing a predicted weather, such as local temperatures with associated times of day, days of week etc.

The predictive temperature values may also be predicted temperature values of other enclosures of a building, outside the enclosure under consideration. Such temperatures can be predicted using the control response and time domain performance curves of these other enclosures.

The system has, as a result from the learning and adaptation optimization process, knowledge of the thermal behavior of the enclosure and the effect of the outside temperature on said thermal behavior, with associated optimized PID-parameters as well as other operating parameters such as timing and magnitude of energy saving indoor temperature drop. The system can match the predicted outside temperature variation to the nearest measured data and schedule accordingly PID-parameters to the thermostats to yield the best available control response to the present temperature in the room and the demand applying to the room.

The local weather forecast is utilized to avoid over heating the room above a set limit as well as going below a set lowest acceptable room temperature. The system learns the time domain performance of each room by said adaptive learning behavior. Using that information the central computing sends the local thermostat parameters how the thermostat optimally takes the forecasted outdoor temperature change into account to save energy and keep the indoor temperature within the set limits.

More precisely, the optimization and scheduling according to the embodiment of the present invention comprises a timing of the predictive behavior. The time domain performance defines the actual time advance of the temperature based on the measured room control response. The timing adapts the advance also to the magnitude of the forecasted outdoor temperature change. The system adapts to the local room behavior using the above described adaptive learning behavior.

The thermostat receives parameters from the central computing reflecting optimized PID controller performance to match with the room need, predicted weather forecast impact to room temperature and related to the magnitude and timing of the energy saving temperature drop. The thermostat may further have a settable range defining a lowest and highest temperature which the local user can set as target indoor temperature. The local user can set desired room temperature to the thermostat using thermostat user interface within these acceptable limits. The thermostat preferably has safety limits for lowest room temperature and highest room temperature that may occur in any circumstances.

According to an embodiment of the present invention the system further has a schedule and target temperature for energy saving temperature and/or day time room temperature drop. More generally, the heating control of the enclosures of the building may be timed to optimize against various goals. The system and method according to the present invention finds particular use in energy saving. The uploaded and /or external sensors uploaded temperature measurement results are periodically or continuously applied to calculate a new set of thermostat PID controller parameters as disclosed herein to further optimize the heating response. The optimization process is learning where the improvement versus the previous response and parallel thermostat optimization results are also applied to define the most desirable parameter set. This way the thermostat parameters adapt optimally to local conditions to maximally save heating energy.

The central computing calculates the thermostat and building heating time domain performance taking into account the absolute heating power available as well as the outdoor temperature. The time domain performance is applied for example in timing to perform the energy saving temperature drop function or outdoor temperature prediction based energy saving compensation optimally to save as much energy as much as possible.

Fig. 2 shows a thermal behavior difference between three heated rooms. The room A and C heating behavior are similar but the radiator absolute heating power is less in room C which limits the temperature range in very cold outdoor temperature condition. The room B has least heating power for the heated space but its insulation is most efficient. Based on the these uploaded measured facts statistics the central computing calculates the optimum timing and magnitude of the energy saving temperature drop taking into account the forecasted outdoor temperature and the predicted heating energy need to come back to maximally save energy during the drop. The calculated information is downloaded to thermostats as control parameters.

The correct timing and magnitude of the energy saving temperature drop avoid losing more energy than saved during the drop while heating back to normal temperature and/or being late in time with the normal temperature. Especially in the air conditioned building it is vitally important to have the desired temperature before the air conditioning is turned on.

The calculated time domain behavior of the enclosure defines the optimal timing and magnitude of the thermostat predictor function. The predictor will thus limit radiator heating power optimally before the outdoor temperature will start to rise. As the optimization is performed in room level the historical statistics of the forecasted outdoor temperature and e.g. sunshine are taken into account. The learning from the statistics enables to eliminate need of manually editing room window direction, floor level and similar parameters.

The energy saving temperature drop timing is an adaptive procedure which takes into account the time domain response of the particular room heating transfer function as well as the nonlinear effect of the outdoor temperature due to the practical limits of the heating power. The initial timing and magnitude are based on the conservative simulated values. The adaptation is performed to tune both the timing and magnitude of the drop by carefully changing the timing and magnitude and cumulating respective actual measured indoor and outdoor temperature values. The timing and magnitude adaptation process with the statistics of the energy consumption results as an optimal performance for the particular room.

Fig. 3 describes two optimized energy saving temperature drops in different conditions. Option 1 has a higher drop temperature 13 than Option 2 and the heating back to the start level temperature 15 may be delayed until a time 16 given by the time domain performance of said enclosure at prevailing outside temperature defining the time it takes to heat from drop to start level temperature. Option 2 has a lower drop 14 temperature and results in an earlier heating start time 17, as it takes longer for the enclosure to reach the start level of temperature. Both options are optimized scheduled temperature drops that using the time domain performance of the present invention reach the desired temperature level at the desired point of time. Whether Option 1 or Option 2 results in a better drop temperature energy saving implementation depends on the amount of energy saved maintaining the drop temperature and the energy needed to reheat the enclosure. According to the present invention, this energy saving can be optimized, because the method and system of the present invention describes the enclosure as a time domain performance defining for each feasible drop level the possible drop time and needed heating time and the energy saving can be optimized knowing energy needed to maintain a certain drop temperature and the energy needed to reheat the enclosure (per unit time) when the outside temperature variation is predicted (or assumed constant, averaged etc.).

According to the present invention and the teachings disclosed herein, the thermostat autonomously controls the local room temperature using the said received PID-parameters and the set demand values and the operational limits.

The central computing unit of the present invention according to the embodiment calculates the PID controller parameters and other operating parameters to local thermostats based on the thermostats and /or external sensors uploaded temperature or other measured (for example $CO_2$ and humidity) tracing information. The capability to use external temperature sensor readings to control the thermostat resolves many issues of the traditional system like vulnerability to a blocked air flow around the radiator thermostat which traditionally leads to too low heating of the room.

Further, based on the magnitude of the needed parameter update the central computing can detect non-acceptable drifting or a sudden change of the room and or building heating conditions to either warn of a minor decay or alarm about malfunctioning of the heating system.

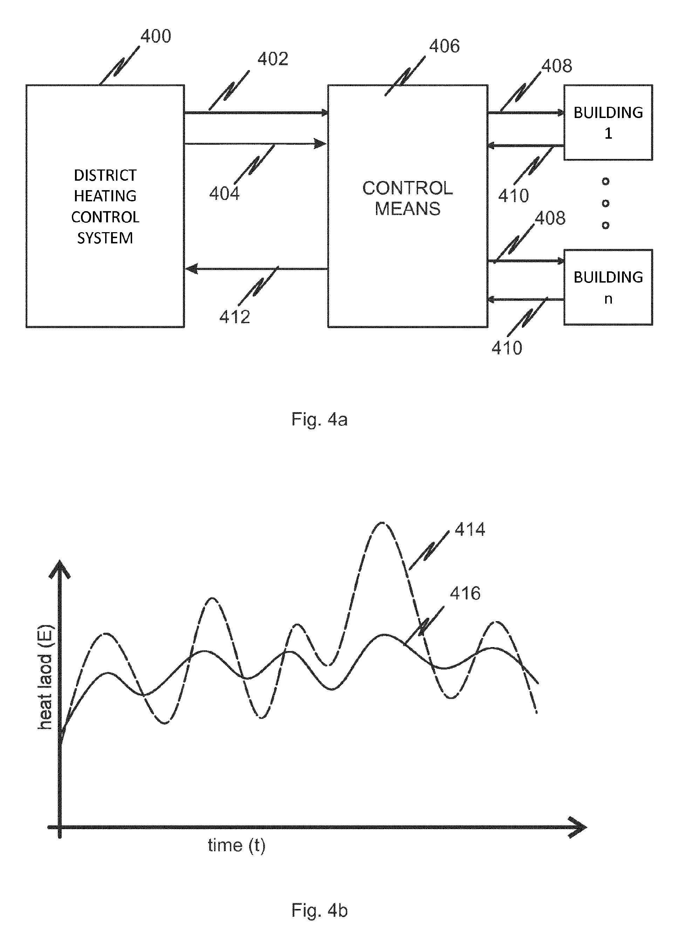

In Fig. 4a is illustrated a basic system architecture of the present invention and in Fig. 4b an exemplary heat loads as a function of time. The district heating control system 400 obtains external information for controlling a heat load in the district heating network. In the prior art, the external information is solely a price signal, which means that during low price period it is heated more and otherwise energy is tried to save. This has naturally caused peaks in heating system, as depicted in Fig. 4b by a dotted line curve 414.

In the present invention, the external information may comprise other information, based on the embodiment in question, such as one or more weather forecasts, for example. The external information 402 is arranged to control means 406. Furthermore, for interactively controlling the heat load 404 according to the present invention, other information, such as a thermal behavior scheme of each enclosure in an entity to be heated and attributes of the enclosures, is arranged to the control means 406. Based on these information, it is possible to create one or more optimization schemes in control means 406 for optimizing heat load in the district heating network, which optimization can be levelling peaks in the heat load, for example. In Fig. 4b, an exemplary heat load levelled by means of the present invention is depicted by a curve 416.

According to the selected optimization scheme created in the control means 406 of the present invention, the enclosures in the system is heated 408. In one embodiment, the information relating to the enclosure is obtained 410. On the basis of the obtained enclosure information, it is possible to create capability data 412 for a central district heating system producer, such as power budget. This feature can be advantageous providing reliable and real time information for producer.

According to the present invention the control means 406, like a central computer entity, is arranged to obtain enclosure data 410, such as enclosure temperature information, and external information 402, which said control means are arranged to produce one or more heating optimization models on the basis of enclosure data and/or external information. Preferably, the enclosure data is obtained for all enclosures in the entity.

The system of the present invention further comprises a data storage for storing enclosure data, such as a thermal behavioral scheme for each enclosure, and attributes assigned for enclosures. The data storage of the present invention can be arranged to reside in a central computer entity or it can be divided to more than one location, such as into a cloud, for example, but not limited to. Data storage is a known technique, so it is not described in more detail in this application.

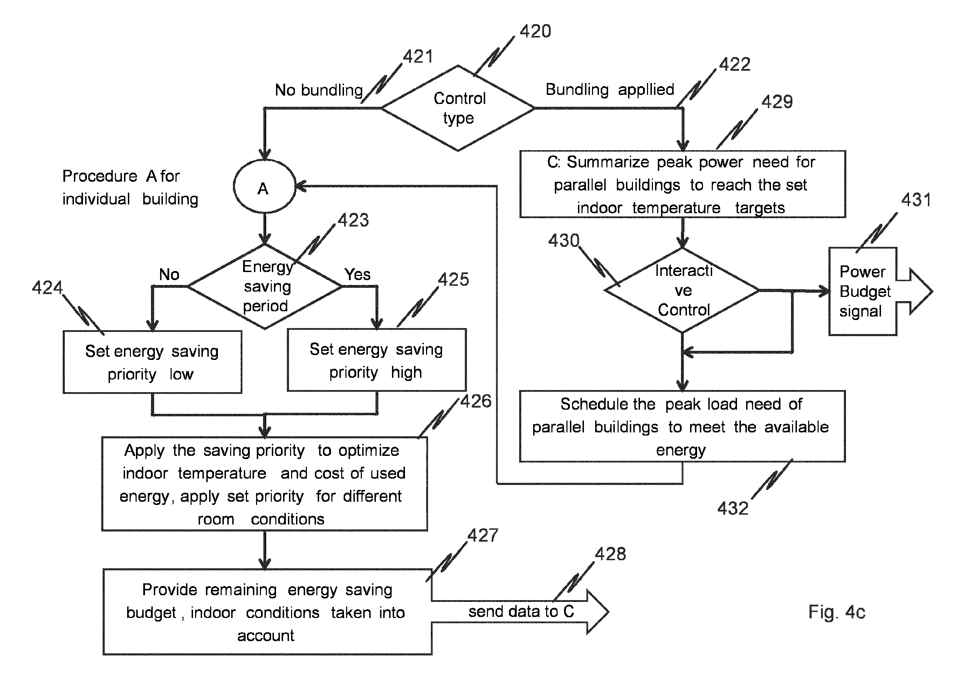

In Fig. 4c, it is depicted a flow chart of an exemplary method for creating a capability data. In the flow chart in question creation of a capability data illustrated as a point of view of one individual building. The skilled person will appreciate that this exemplary method can be applied to the entity in the central heating system comprising a number of buildings.

At step 420, a control type is selected. In a prior art type, the entity to be heated is not selected, so no bundling is selected 421. After that an energy saving period 423 is selected. If selecting no, energy saving priority is selected low 424. Selecting "yes" sets the energy saving priority high 425. The selected saving priority is applied to optimize indoor temperature and cost of used energy at step 426. At that step, the set priority can also be applied for different room conditions. At step 427, a budget can be provided taken into account used energy and indoor conditions.

If the entity to be heated is divided into a number of enclosures, bundling applied 422 is selected. The budget created at step 427 can be transferred to the step 429, wherein a peak power need is summarized for parallel buildings to reach the set indoor temperature targets. Based on the result of step 429, interactive control is selected at step 430. A power budget signal can be created and forwarded at step 431, and/or the peak load need of parallel buildings to meet the available energy can be scheduled at step 432. After step 432, the method continues at step 423 for selecting the energy saving period.

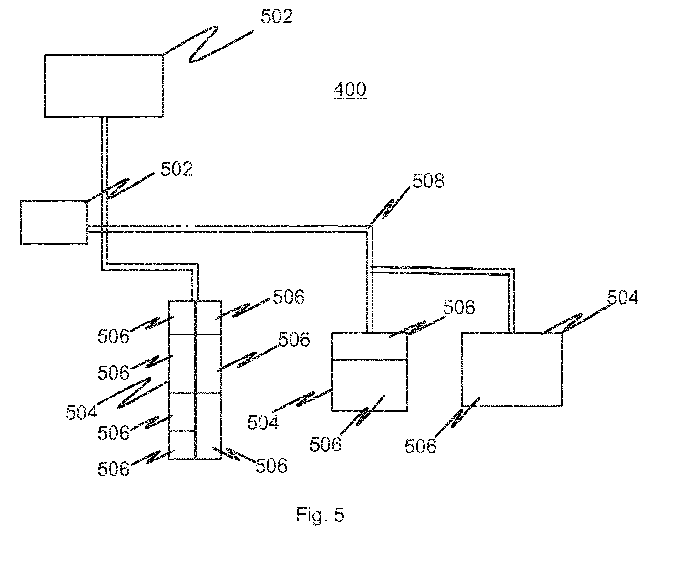

Fig. 5 illustrates an exemplary view of the system according to the present invention. In the system 400 of the present invention, a district heat power station 502 is arranged to provide heat load in a form of heating medium via a district heating network 508 into an entity to be heated.

The person skilled in the art will appreciate that the district heat power station 502 can be an entity comprising one or more units, which units may be started separately when needed, for example. District heating network, for its part, is a known technique usually comprising pipes dig into the ground, via which heating medium is lead to the entity to be heated.

Typically, the entity to be heated comprises several buildings 504, which can be apartment houses, detached houses, office buildings, business premises, factories, or other building having spaces needed to be heated. In the present invention, the entity to be heated is divided into a number of enclosures 506. As described earlier, an enclosure can be a room, a space or another zone separated from a wider space, for example.

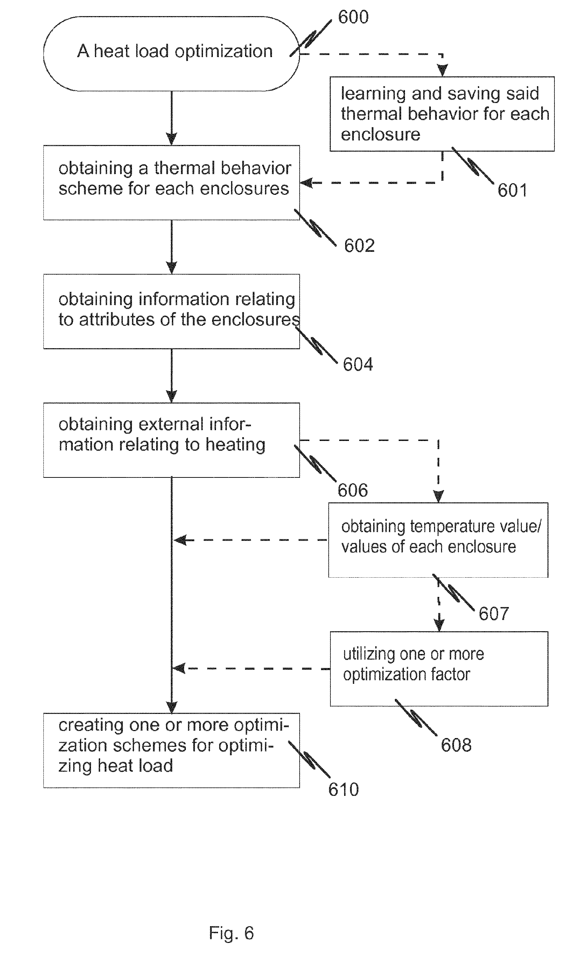

In Fig. 6, it is disclosed a flow chart of a method for optimizing a heat load in a district heating network adapted to distribute heat in a form of heating medium to an entity to be heated according to an embodiment of the present invention 600.

According to an embodiment, the system of the present invention is run through an initializing step 601 (indicated by broken lines in Fig. 6) of learning and saving said thermal behavior scheme for each enclosure in the entity before introducing the heat load optimization. The initializing step can be continued from a day or a couple of days to a week, for example, but not limited to, in order to gather enough information for creating a thermal behavior scheme for an enclosure.

In another embodiment, the thermal behavioral schemes are first created and then updated at the same time when executing the heating optimization model. In this embodiment some initial table values may be used before real data is obtained from enclosures. However, both embodiments can utilize continuous learning system for updating the thermal behavioral schemes in the system. As described earlier, outside temperature affects the temperature behavioral of an enclosure. For that reason, continuous learning is advantageous.

According to the present invention, a thermal behavioral scheme for an enclosure is created on the basis of the obtained temperature information of the enclosure combined with other information, such as outside temperature, heating instructions sent to the thermostat comprising data, e.g. heating time and the temperature of the heating medium, for example. As described above, depending on embodiment, the thermal behavioral schemes of the system are created in the initializing step 601 or in a continuous learning step.

At step 602 and 604, a thermal behavior scheme and information relating to attributes of each enclosure are obtained, respectively. As described above, the thermal behavior schemes and attributes are stored in a data storage.

For the purpose of the heating optimizing, different attributes are defined and related to enclosures. An attribute may be defined as any factor whose value affects the heating optimization, such as, but not limited to, category, usage time range, temperature range, and location in the building. The attributes affect the heating optimization both as a group and uniquely. For example, by prioritizing certain category/categories, the effect of the enclosures can be considered as groups. In the other hand, attributes, such as the usage time range, the temperature range, and the location in the building, are individually affected the heating optimization.

The attribute 'category' is selected to an enclosure on the basis of the enclosure type and/or use. For example, enclosure can be divided into categories like residential rooms, corridors, hallways, office rooms, business premises, class rooms, factory spaces, storerooms, etc. It is advantageous to prioritize one or more categories over the others, so that heating of residential rooms, office rooms and class rooms may have a higher priority over corridors, hallways and storerooms, for example.

The usage time range for an enclosure is selected, if the enclosure is in use only a part of the time, like office rooms, for example. In that case, it is unnecessary to keep the enclosure in its temperature range all the time, but it can be let to cool down in the time, when it is not in use.

Furthermore, the temperature range for an enclosure is selected to define in which range the temperature in the enclosure in question can be varied. In some embodiments, the enclosure attributes comprises more than one set of temperature ranges for one enclosure. In this embodiment, it is possible to define also limits, in addition to normal temperature variation, under which or over which the temperature is not allowed to decrease or rise, respectively. It is useful for spaces like storerooms and data centers, wherein too high or too low temperature may cause damages.

The location in the building is an attribute, which can be taken account, when considering a heating order in a building. It is well known that the heat spreads effectively from center to sides and from down to up.

In one embodiment, the user can select the attributes, which are taken into account, and the optimization schemes are based on selected attribute types. The person skilled in the art will appreciate that other attributes than those disclosed herein may be assigned to enclosures.

At step 606, external information relating to heating is obtained. The content of external information can vary, but preferably the external information comprises one or more weather forecasts, which weather forecasts may comprise both short range and medium range forecasts. Typically, a short range weather forecast can preferably be e.g. 1-5 days, more preferably 2-3 days, and a medium range forecast e.g. one week - 10 days. In an embodiment, the system of the intention is arranged to obtain also long range weather forecasts, which can span up to 2-3 months. In one embodiment, the weather forecasts are weighted, so that a short range forecasts are assigned with a higher weight than longer range forecasts. Advantageously, obtained weather forecasts are local forecasts rather than a wider area forecasts.

In another embodiment, the external information comprises, additionally or alternatively, information relating to energy prices and costs. This embodiment enables optimizing a heat load based on varying prices, if predictable, so that peaks in heating may be optimized to lower costs season.

In one embodiment, at step 608 (indicated by broken lines in Fig. 6), one or more optimization factors are utilized, which optimization factors are from a group consisting of: prioritizing one or more categories, pre-heating one or more enclosures and/or categories, post-heating one or more enclosures and/or categories, allowing the temperature to drop a predetermined amount in one or more enclosures and/or categories, optimizing a heating order in a building.

Optimization factors of the present invention comprise various measures for optimizing a heat load. A heat load can be optimized e.g. by levelling the expected peaks in the heat load according to the weather forecast, for example. Another way for optimization is to concentrate heating to the predicted low cost seasons, for example. In one embodiment, the method for heat optimization is arranged to take into account both aspects and to create an optimization scheme based on both costs and heating requests.

Prioritizing one or more categories is typically used as to ensure a comfort temperature in enclosures where people reside a longer time, such as homes, office rooms and class rooms. The category/categories or enclosures having a higher priority are heated at the cost of lower category/categories, i.e. in order to maintain the predicted temperature range in a higher category/ higher categories, the temperature in a lower category, categories are allowed to drop.

By pre-heating one or more enclosures and/or categories heat can be gathered, so that it is possible to let the temperature drop after that in the enclosures in question without sacrificing residential comfort, when concentrating the heating to other categories/enclosures. Pre-heating may be especially suitable for non-residential enclosures, such as corridors, hallways and warehouses.

Post-heating one or more enclosures and/or categories is used to keep the temperature in some enclosures/categories at a higher level, when enclosures are not used. By maintaining a higher temperature level, it takes shorter time and less energy to heat the enclosures in question to the predetermined temperature range.

Allowing the temperature to drop a predetermined amount in one or more enclosures and/or categories can be used e.g. in situations, where a short cold period is predicted. Instead of keeping the set temperature range in enclosures, the temperature can be let to drop e.g. one degree in in some enclosures/categories, and thus level the expected peak in heating. The enclosures/categories to which this optimization factor is applied can be e.g. non-residential enclosures, but it can be applied in a wider range also concerning residential enclosures. This optimization factor can be arranged in such way that it is first applied to categories having a lower priority and, when needed, widened to higher priority categories in ascending order.

Optimizing a heating order in a building is an optimization factor, which is utilized for heating enclosures effectively and in a cost saving manner. As described above, information related to a location of the enclosure in the building is used to define effective heating order. Because heat is known to spread from inside to outward and from down to upwards, enclosures having a suitable location can be heated more effectively or start the heating earlier in order to spread the heat into other enclosures and thus reducing the heating requirements of other enclosures.

In an embodiment, all optimization factors are used for creating an optimization scheme. In another embodiment, the method comprises a step of selecting one or more optimization factors by a user. In the embodiment in question, the user is able to select the optimization factors used for creating an optimization scheme and/or the attributes the selected optimization factors are applied to.

In an embodiment, the method according present invention comprises a step of obtaining information about an overall load situation in said district heating network. According to the present embodiment the control means are arranged to utilize the overall load situation information in the next step, when creating one or more optimization schemes. Overall load situation can have an effect on the optimization model, e.g. how optimization factors are selected, for example. The system of the present invention can be arrange to create more energy consuming models, if overall load situation is low, and less consuming models, if overall load situation is higher.

At step 610, one or more optimization schemes for optimizing heat load are created. It is advantageous to create one scheme without any optimization factors based only on stored enclosure data and, in an embodiment, obtained temperature information of enclosures and at least one more scheme by using optimization factors. In this way, it is possible to compare these schemes and evaluate the advantages between different schemes.

In an embodiment, in addition to or instead of temperature information of enclosures, the system of the present invention is arranged to obtain information about a valve position of radiators in enclosures. Information relating to the valve position of a radiator comprises data about amount of heating media flowing through the valve and a heating time, for example. It is advantageous to combine the temperature information of the enclosure with the valve position information in order to create or update a reliable thermal behavioral scheme for the enclosure in question.

As described earlier, depending on embodiment, schemes can be created by taking account external information, such as weather forecasts and/or estimated variations in energy costs, but various schemes can be created in order to evaluate the effects of rapid heating, starting an additional heating power station and/or trying to level the heat load as much as possible. The person skilled will appreciate that another point of views can be used when creating a heating scheme.

In one embodiment, the method according present invention comprises a step of executing a selected optimization scheme. In this step, the control means of the present invention is arranged to transfer the heating instructions to the heating control means. Advantageously, the heating instruction is transferred only to those heating control means, to which they concern. More advantageously, only the changed instructions or instructions not yet transferred are transferred to the control means. In another embodiment, instructions for a certain time period, such as a day, are transferred to the heating control means at a time. In this way it may be possible to implement battery optimization.

In an embodiment, the method according present invention comprises a step 607 (indicated by broken lines in Fig. 6) of obtaining temperature value/values of each enclosure. In the embodiment in question, the temperature values can be utilized for creating optimization schemes, but also to observe the temperature of each enclosure. The cycle of obtaining the temperature information of an enclosure can vary due to various issues, such as a size of and/or a category of the enclosure in question. It may be possible to arrange the system to obtain the temperature value in such of cycle, which is known to lapse, when the temperature in the enclosure in question drops or rises one degree. In this manner it may be possible to save the batteries of the thermometers.

In another embodiment, the method according present invention comprises a step of updating one or more said thermal behavioral schemes in accordance of obtained information relating to the heating of enclosures. The system of the present invention can be arranged to continuously learn and update the thermal behavioral schemes on the basis of obtained temperature information and heating information. The updating of schemes can be performed after every reading cycle, for example. The heating information can comprise one or more of the same information as described in the initializing step, i.e. such as outside temperature, heating instructions sent to the thermostat comprising data, e.g. the heating time and the temperature of the heating medium.

In one embodiment the method according present invention comprises a step of indicating, by some known manner, if significant changes happen in a thermal behavioral scheme. At least, slowing in heating may be a symptom of some failures or malfunctions, such as leaking windows, air in a radiator and/or some malfunctioning or broken component in the system.

The scope of the invention is determined by the attached claims together with the equivalents thereof. The skilled persons will again appreciate the fact that the explicitly disclosed embodiments were constructed for illustrative purposes only, and the scope will cover further embodiments, embodiment combinations and equivalents that better suit each particular use case of the invention.

## Claims

1. A system for optimizing the heat load in a district heating network adapted to distribute heat in a form of heating medium into an entity to be heated, which entity is divided into a number of enclosures, **characterized in that**, the system comprises:

   - a data storage for storing enclosure data, which enclosure data comprises a thermal behavioral scheme for each enclosure, and at least one attribute for each enclosure selected from group consisting of: a category, a usage time range, one or more temperature ranges, a location in the building;
   - means for obtaining temperature information related to said enclosures;
   - means for obtaining external information, such as weather forecast, related to heating;
   - heating control means, such as one or more radiator, for adjusting heating in an enclosure, which heating control means are arranged to be functionally connected with the enclosure in question;
   - control means, like a central computer entity, for obtaining enclosure data, enclosure temperature information and external information, which said control means is arranged to produce one or more heating optimization models on the basis of enclosure data, enclosure temperature information and/or external information;

   wherein said system is arranged to execute a selected heating optimization model.

2. A method for optimizing a heat load in a district heating network adapted to distribute heat in a form of heating medium to an entity to be heated, which entity is divided into a number of enclosures, **characterized in that**, the method comprises at least of the following steps:

   - obtaining a thermal behavior scheme of each enclosure;
   - obtaining information relating to attributes of the enclosures;
   - obtaining external information relating to heating;
   - creating one or more optimization schemes for optimizing heat load.

3. A method according to claim 2 further comprising a step of utilizing one or more optimization factors from a group consisting of: prioritizing one or more categories, pre-heating one or more enclosures and/or categories, post-heating one or more enclosures and/or categories, allowing the temperature to drop a predetermined amount in one or more enclosures and/or categories, optimizing a heating order in said entity or a part thereof.

4. A method according to any of claims 2-3 further comprising a step of selecting one or more optimization factors.

5. A method according to any of claims 2-4 further comprising a step of obtaining information about an overall load situation in the said district heating network.

6. A method according to any of claims 2- 5 further comprising a step of executing a selected optimization scheme.

7. A method according to any of claims 2-6 further comprising a step of obtaining temperature value/values of each enclosure.

8. A method according to claim 7 further comprising a step of updating one or more said thermal behavioral schemes in accordance of obtained information relating to the heating of enclosures.

9. A method according to claim 8 further comprising a step of indicating significant changes in a thermal behavioral scheme.

**10.** A method according to any of claims 2-9 further comprising an initializing step of learning and saving said thermal behavior for each enclosure before introducing the heat load optimization.

**Amended claims in accordance with Rule 137(2) EPC.**

**1.** A system for optimizing the heat load of a district heating network (508) adapted to distribute heat in a form of heating medium into an entity to be heated (504), which entity (504) is divided into a number of enclosures comprising at least one enclosure, **characterized in that**, the system (400) is configured dynamically to optimize the heat load (E) of said district heating network (508) by optimizing the heat load; of said entity (504) comprising at least one enclosure (506) to be heated in respect to the caused heat load (414, 416) of said enclosures (506) in said entity (504); to said district heating network (508), wherein the system comprises:

- a data storage (6) for storing enclosure data, which enclosure data comprises a thermal behavioral scheme for each enclosure, and at least one attribute for each enclosure selected from group consisting of: a category, a usage time range, one or more temperature ranges, a location of said enclosure (506) in the building;
- means for obtaining at least a temperature value of an enclosure (506) for temperature information related to said at least one of the enclosures (506);
- means for obtaining external information (402), such as weather forecast (9), related to heating of at least one of said enclosures (506);
- heating control means (7, 8), to control heating by, such as at least one radiator, for adjusting heating in at least in one of said enclosures (506), which heating control means are arranged to be functionally connected with the enclosure (506) in question;
- control means (406), like a central computer entity (6), configured to obtain enclosure data, enclosure temperature information and external information, which said control means is arranged to produce one or more heating optimization models on the basis of enclosure data, enclosure temperature information and/or external information;

wherein said system is arranged to execute heating according to a selected heating optimization model to heat at least one of said enclosures (506), interactively in real time in control of said control means (406), by using the obtained enclosure data, to heat said at least one enclosure (506) of said entity (504), as based on said obtained enclosure information and the capability data (412), such as a power budget, being communicated to the central district heating system producer, to counter direction as the responsively formed heat load (410).

**2.** A method for optimizing a heat load in a district heating network adapted to distribute heat in a form of heating medium to an entity to be heated, which entity is divided into a number of enclosures, **characterized in that**, the method comprises at least of the following steps:

- obtaining a thermal behavior scheme of each enclosure;
- obtaining information relating to attributes of the enclosures;
- obtaining external information relating to heating;
- creating one or more optimization schemes for optimizing heat load;

**3.** wherein the method comprises heating according to a selected heating optimization model to heat at least one of said enclosures (506), interactively in real time in control of said control means (406), by using the obtained enclosure data, to heat said at least one enclosure (506) of said entity (504), as based on said obtained enclosure information and the capability data (412), such as a power budget, being communicated to the central district heating system producer, to counter direction as the responsively formed heat load (410).A method according to claim 2 further comprising a step of utilizing one or more optimization factors from a group consisting of: prioritizing one or more categories, pre-heating one or more enclosures and/or categories, post-heating one or more enclosures and/or categories, allowing the temperature to drop a predetermined amount in one or more enclosures and/or categories, optimizing a heating order in said entity or a part thereof.

**4.** A method according to any of claims 2-3 further comprising a step of selecting one or more optimization factors.

**5.** A method according to any of claims 2-4 further comprising a step of obtaining information about an overall load situation in the said district heating network.

6.  A method according to any of claims 2- 5 further comprising a step of executing a selected optimization scheme.

7.  A method according to claim 1 further comprising a step of updating one or more said thermal behavioral schemes in accordance of obtained information relating to the heating of enclosures.

8.  A method according to claim 7 further comprising a step of indicating significant changes in a thermal behavioral scheme.

9.  A method according to any of claims 2-8 further comprising an initializing step of learning and saving said thermal behavior for each enclosure before introducing the heat load optimization.

MAINTENANCE
USER INTERFACE

INHABITANT
USER INTERFACE

BUILDING

THERMOSTAT
INCL. SENSOR

1

7

8

ROOM 1

DATABASE AND
CENTRAL COMPUTING

6

ROUTER

THERMOSTAT
MAY INCL. SENSOR

2

4

REMOTE SENSOR

5

10

LOCAL
WEATHER FORECAST

9

THERMOSTAT
MAY INCL. SENSOR

3

ROOM 2

Fig. 1

Fig. 2

Fig. 3

Fig. 4a

Fig. 4b

Procedure A for individual building

420 — Control type

421 — No bundling

422 — Bundling applied

429 — C: Summarize peak power need for parallel buildings to reach the set indoor temperature targets

430 — Interactive Control

431 — Power Budget signal

432 — Schedule the peak load need of parallel buildings to meet the available energy

A

423 — Energy saving period

Yes

No

425 — Set energy saving priority high

424 — Set energy saving priority low

426 — Apply the saving priority to optimize indoor temperature and cost of used energy, apply set priority for different room conditions

427 — Provide remaining energy saving budget, indoor conditions taken into account

428 — send data to C

Fig. 4c

Fig. 5

A heat load optimization — 600

learning and saving said thermal behavior for each enclosure
601

obtaining a thermal behavior scheme for each enclosures
602

obtaining information relating to attributes of the enclosures
604

obtaining external information relating to heating
606

obtaining temperature value/ values of each enclosure
607

utilizing one or more optimization factor
608

creating one or more optimization schemes for optimizing heat load
610

Fig. 6

# EUROPEAN SEARCH REPORT

Application Number

EP 15 16 3955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ralf-Roman Schmidt ET AL: "SGMS - SmartHeatNet SmartHeatNetworks - Intelligente Fernwärmenetze (FFG-Nr. 825549) Ein Projekt im Rahmen der Smart Grids Modellregion Salzburg", , 28 June 2013 (2013-06-28), pages 1-148, XP055222567, Wien / Salzburg, Austria Retrieved from the Internet: URL:http://www.smartgridssalzburg.at/filea dmin/user_upload/downloads/SmartHeatNet_En dbericht_final.pdf [retrieved on 2015-10-21] * page 5, paragraphs 3, 4, 5 * * page 6, paragraphs 1, 2, 4 * * page 7, paragraphs 1, 2, 4; figure 1 * * page 11, paragraph 3-5 * * page 15, paragraph 5 * * page 19, paragraph 4 * * page 27, paragraph 3; figure 10 * * page 33, paragraphs 1, 2; figure 26 * * page 41, paragraph 2-4 * * page 55, paragraph 3 - page 65, paragraphs 2, 4; figures 36, 38 * | 1-10 | INV. G05D23/19 |
| X | WO 2014/152301 A2 (NEST LABS INC [US]) 25 September 2014 (2014-09-25) | 1 | |
| A | * paragraphs [0056], [0057], [0066], [0067], [0070], [0071], [0080], [0119] - [0122], [0125], [0127] * * paragraphs [0239] - [0241]; figures 1, 2, 17 * | 2-10 | TECHNICAL FIELDS SEARCHED (IPC)  G05D |

-/--

The present search report has been drawn up for all claims

| Place of search | Date of completion of the search | Examiner |
|---|---|---|
| Munich | 22 October 2015 | Nicolaucig, Aldo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt

European
Patent Office

Office européen
des brevets

**EUROPEAN SEARCH REPORT**

Application Number

EP 15 16 3955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | F. WERNSTEDT ET AL: "INTELLIGENT DISTRIBUTED LOAD CONTROL", THE 11TH INTERNATIONAL SYMPOSIUM ON DISTRICT HEATING AND COOLING, 31 August 2008 (2008-08-31), XP055129518, * page 1, column 1 * * page 2, columns 1, 2 * * page 3, column 2 * * page 5, column 2 * ----- | 1-10 | |

TECHNICAL FIELDS
SEARCHED (IPC)

The present search report has been drawn up for all claims

| Place of search | Date of completion of the search | Examiner |
|---|---|---|
| Munich | 22 October 2015 | Nicolaucig, Aldo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 16 3955

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2015

| Patent document cited in search report | | Publication date | Patent family member(s) | | Publication date |
|---|---|---|---|---|---|
| WO 2014152301 | A2 | 25-09-2014 | AU 2014239934 | A1 | 03-09-2015 |
| | | | CA 2902183 | A1 | 25-09-2014 |
| | | | US 2014277769 | A1 | 18-09-2014 |
| | | | WO 2014152301 | A2 | 25-09-2014 |

EPO FORM P0459

For more details about this annex : see Official Journal of the European Patent Office, No. 12/82